Europäisches Patentamt

European Patent Office

Office européen des brevets

(11) Veröffentlichungsnummer : **0 039 764**
**B1**

(12) **EUROPÄISCHE PATENTSCHRIFT**

(45) Veröffentlichungstag der Patentschrift :
13.07.83

(21) Anmeldenummer : **81101813.4**

(22) Anmeldetag : **12.03.81**

(51) Int. Cl.³ : **H 04 B 15/02, H 02 K 11/00**

(54) Schaltungsanordnung zur Entstörung eines Reihenschlussmotors.

(30) Priorität : **10.05.80 DE 3018038**

(43) Veröffentlichungstag der Anmeldung :
**18.11.81 Patentblatt 81/46**

(45) Bekanntmachung des Hinweises auf die Patenterteilung : **13.07.83 Patentblatt 83/28**

(84) Benannte Vertragsstaaten :
**CH FR IT LI SE**

(56) Entgegenhaltungen :
**CH A 533 924**
**DE A 2 921 815**
**DE B 2 409 781**
**US A 3 634 874**

(73) Patentinhaber : **Pfaff Haushaltmaschinen GmbH**
**Gritznerstrasse 11**
**D-7500 Karlsruhe-Durlach (DE)**

(72) Erfinder : **Bateika, Gediminas, Dipl.-Ing.**
**Hirschstrasse 57**
**D-7500 Karlsruhe (DE)**

(74) Vertreter : **Klein, Friedrich**
**Königstrasse 154**
**D-6750 Kaiserslautern (DE)**

Schaltungsanordnung zur Entstörung eines Reihenschlußmotors

Die Erfindung betrifft eine Schaltungsanordnung nach dem Oberbegriff des Anspruchs 1.

Derartige Motoren, die im Gleichstromkreis des Brückengleichrichters angeordnet sind, weisen eine gute Drehzahlstabilisierung bei Netzschwankungen und ein hohes Drehmoment auch bei niedrigen Drehzahlen auf. Da aber die Feldspulen innerhalb der Brücke liegen, können sie zur Entstörung nicht beitragen. Zur Entstörung des Motors muß daher ein hoher Aufwand an Entstörmittel betrieben werden, wobei es nur bei Verwendung von Drosseln mit relativ hohen Induktivitätswerten gelingt, den Störpegel ausreichend zu begrenzen. Die Stördrosseln sind dabei oft teurer als die übrigen Bauteile der Steuerung.

Die Erfindung bezweckt die Schaffung einer hochwertigen Entstörung bei einer derartigen Motoranordnung und den Wegfall der sonst notwendigen Entstördrossel, welche die Koten, das Gewicht und den Platzbedarf der Motorsteuerung erhöhen.

Bei Motoren, welche durch Wechselstrom erregt werden, ist es bereits bekannt, die Feldspulen in die eine oder in beide Netzzuleitungen anstelle der sonst notwendigen Entstördrosseln zu schalten. Eine derartige Maßnahme ist aber bei Motoren mit durch Gleichstrom erregtem Anker nicht möglich, da sich sonst das Feld frequenzabhängig ändern würde und der Motor funktionsunfähig wäre.

Der Erfindung liegt die Aufgabe zugrunde, eine schaltungsanordnung zur Entstörung des im Oberbegriff des Anspruchs 1 bezeichneten Motors zu schaffen, bei der die an sich sehr teueren Entstördrosseln eingespart werden.

Nach der Erfindung werden nun die Feldspulen als Drosselspulen verwendet. Neben der Einsparung der Entstördrosseln entfällt auch die durch sie zusätzlich bedingte Erwärmung. Die Feldspulen können dabei nebeneinander oder um 180 Grad versetzt liegen.

Um einen sehr laufruhigen Motor zu erhalten, kann jede der beiden Feldspulen unterteilt und gegenüber der anderen um 180 Grad versetzt angeordnet sein. Dabei besteht die Möglichkeit, die bei der gleichen Halbwelle erregten Feldspulenteile jeweils über eigene Gleichrichter an einen anderen Strang der Netzzuleitung zu schalten.

In der Zeichnung sind zwei Ausführungsbeispiele der Erfindung dargestellt. Es zeigen :

Figur 1 ein Schaltschema einer Motorsteuerung mit der erfindungsgemäßen Entstörschaltung und

Figur 2 ein Schaltschema einer abgeänderten Ausführung der Motorsteuerung.

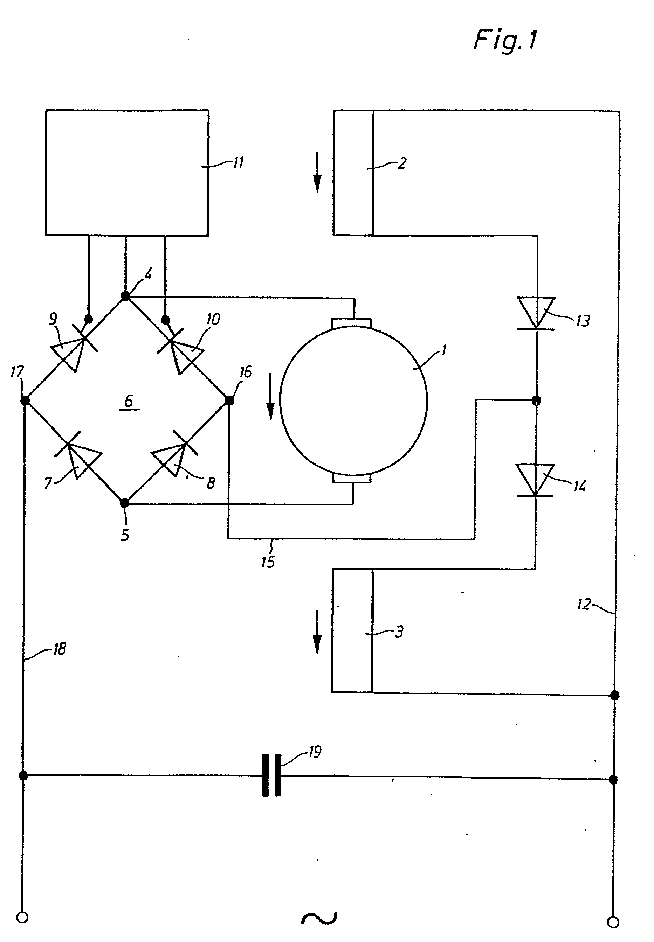

Die Fig. 1 zeigt einen Reihenschlußmotor, der aus einem Anker 1 und zwei Feldspulen 2 und 3 besteht. Der Anker 1 ist an Knotenpunkte 4 und 5 eines Brückengleichrichters 6 geschaltet. Der Brückengleichrichter 6 besteht aus zwei Dioden 7 und 8 sowie zwei Thyristoren 9 und 10. Die Steuerelektroden der Thyristoren 9 und 10 sind an eine bekannte Zündschaltung 11 angeschlossen, welche die Thyristoren 9 und 10 zündet.

Die beiden Feldspulen 2 und 3 sind mit jeweils einem Ende an einen Strang 12 eines Wechselstromnetzes angeschlossen, während ihre anderen Enden über je eine Diode 13 und 14 miteinander verbunden sind. An die Verbindungsleitung zwischen den beiden Dioden 13 und 14 ist eine Leitung 15 angeschlossen, die an einem Knotenpunkt 16 des Brückengleichrichters 6 angeklemmt ist. Ein weiterer Knotenpunkt 17 des Brückengleichrichters 6 ist mit einem zweiten Strang 18 des Wechselstromnetzes verbunden. Die Stränge 12 und 18 verbindet ein Störschutzkondensator 19.

Vom Wechselstromnetz wird Wechselstrom über den Strang 12 dem Brückengleichrichter 6 zugeführt und dort gleichgerichtet. Der gleichgerichtete Strom wird entsprechend der Zündung der Thyristoren 9 und 10 durch die Zündschaltung 11 in der Pfeilrichtung über den Anker 1 geleitet. Von dem in den Strängen 12 und 18 fließenden Wechselstrom wird die eine Halbwelle über die Diode 14 und die Feldwicklung 3 und die andere Halbwelle über die Feldwicklung 2 und die Diode 13 geleitet, so daß die Feldwicklungen 2 und 3 wechselweise von in Pfeilrichtung fließendem Gleichstrom erregt werden.

Durch die vorgeschlagene Schaltung werden die Feldspulen 2 und 3 wechselweise als Entstördrossel verwendet, da sie in dem von Wechselstrom durchflossenen Strang 18 außerhalb des Brückengleichrichters 6 liegen. Zusammen mit dem Störschutzkondensator 19 bewirken sie eine ausreichende Funkentstörung, die den Einbau einer zusätzlichen Entstördrossel unnötig machen.

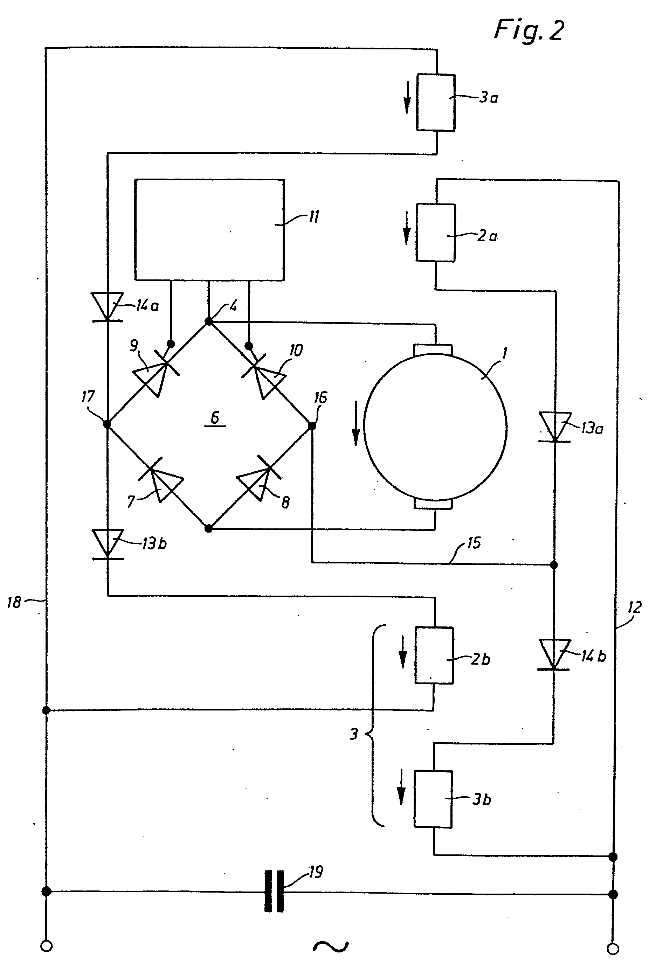

Das in Fig. 2 dargestellt Ausführungsbeispiel stimmt im wesentlichen mit der Motorschaltung nach Fig. 1 überein. Unterschiedlich ist lediglich die geteilte Anordnung der beiden Feldspulen 2 und 3, die in Teilspulen 2a und 2b sowie in Teilspulen 3a und 3b unterteilt sind. Die Teilspulen 2a und 3b sind an den Strang 12 angeschlossen und durch die Dioden 13a und 14b miteinander verbunden, deren Verbindung an die Leitung 15 angeschlossen ist. Die Teilspulen 2b und 3a sind mit ihren einen Enden an den Strang 18 angeschlossen, während ihre anderen Enden über Dioden 13b und 14a miteinander verbunden sind. Die Verbindung der beiden Dioden 13b und 14a ist dabei an den Knotenpunkt 17 des Brükengleichrichters 6 angeschlossen.

Die Wirkungsweise des Ausführungsbeispieles nach Fig. 2 ist im Prinzip völlig identisch mit der des Ausführungsbeispieles nach der Fig. 1. Die eine Hauptwelle des Wechselstromes fließt dabei über den Strang 12, Teilspule 2a, Diode 13a, Thyristor 10, Anker 1, Diode 7, Diode 13b und Teilspule 2b zum Strang 18.

Die andere Halbwelle des Wechselstromes fließt von Strang 18 über Teilspule 3a, Diode 14a, Thyristor 9, Anker 1, Diode 8, Diode 14b und Teilspule 3b zum Strang 12.

Durch die Teilung der Spulen 2 und 3 wird die Feldunsymmetrie beseitigt, und eine dadurch eventuell vorhandene Geräuschbildung entfällt.

### Ansprüche

1. Schaltungsanordnung zur Entstörung eines zwei Feldspulen (2, 3) und einen Anker (1) aufweisenden Reihenschlußmotors, dessen Anker im **Gleichstromkreis eines** Brückengleichrichters (6) angeordnet ist, dessen Gleichrichter (7 bis 10) wenigstens teilweise (9, 10) steuerbar sind, dadurch gekennzeichnet, daß die beiden Feldspulen (2, 3) des Motors jeweils über Gleichrichter (13, 14 bzw. 13a, 13b, 14a, 14b) antiparallel in die Netzzuleitung des Brückengleichrichters (6) geschaltet sind.

2. Schaltungsanordnung nach Anspruch 1, dadurch gekennzeichnet, daß beide Feldspulen (2, 3) mit jeweils ihrem einen Ende gemeinsam an den einen Strang (12) der Netzzuleitung angeschlossen, mit jeweils ihrem anderen Ende über zwei in Reihe geschaltete Gleichrichter (13, 14) miteinander verbunden sind und die Verbindung der Gleichrichter (13, 14) über den Brückengleichrichter (6) an den anderen Strang (18) der Netzzuleitung angeschlossen ist.

3. Schaltungsanordnung nach Anspruch 1 oder 2, dadurch gekennzeichnet, daß die Feldspulen (2, 3) geteilt und die jeweils zusammengehörigen Teilspulen (2a, 2b bzw. 3a, 3b) um 180 Grad zueinander versetzt angeordnet sind.

4. Schaltungsanordnung nach Anspruch 3, dadurch gekennzeichnet, daß jede der von der gleichen Halbwelle des Netzstromes erregten Teilspulen (2a, 2b bzw. 3a, 3b) über den ihr zugeordneten Gleichrichter (13a, 13b bzw. 14a, 14b) an einen anderen Strang (12, 18) der Netzzuleitung geschaltet ist.

### Claims

1. Circuit arrangement for eliminating the interference of a series-wound motor comprising two field coils (2, 3) and an armature (1) which is arranged in the direct current circuit of a bridge-connected rectifier (6), the rectifiers (7 to 10) of which are at least partly controllable, characterised in that the two field coils (2, 3) of the motor are in each case connected in an antiparallel manner into the mains lead of the bridge-connected rectifier (6) by way of rectifiers (13, 14 and 13b, 14a, 14b, respectively).

2. Circuit arrangement according to claim 1, characterised in that the two field coils (2, 3) are in each case jointly connected by one of their ends to one line (12) of the mains lead, the other ends of the field coils (2, 3) being in each case connected together by way of two rectifiers (13, 14) connected in series, and the connection of the rectifiers (13, 14) is connected to the other line (18) of the mains lead by way of the bridge-connected rectifier (6).

3. Circuit arrangement according to claim 1 or 2, characterised in that the field coils (2, 3) are divided and the respective associated partial coils (2a, 2b and 3a, 3b, respectively) are offset with respect to one another by 180 degrees.

4. Circuit arrangement according to claim 3, characterised in that each of the partial coils (2a, 2b and 3a, 3b, respectively) excited by the same half-wave of the mains current is connected to another line (12, 18) of the mains lead by way of its associated rectifier (13a, 13b and 14a, 14b, respectively).

### Revendications

1. Agencement de circuit pour le déparasitage d'un moteur série comportant deux bobines d'excitation (2, 3) et un induit (1), dont l'induit est monté dans le circuit de courant continu d'un redresseur en pont (6), dont les redresseurs (7 à 10) peuvent être commandés au moins en partie (9, 10), caractérisé en ce que les deux bobines d'excitation (2, 3) du moteur sont montées chacune, par l'intermédiaire de redresseurs respectifs (13, 14 ; 13a, 13b, 14a, 14b), en antiparallèle dans la ligne d'amenée du courant de secteur au redresseur en pont (6).

2. Agencement de circuit selon la revendication 1, caractérisé en ce que les deux bobines d'excitation (2, 3) sont, par une de leurs extrémités, reliées ensemble à un conducteur (12) de la ligne d'amenée du courant de secteur, et, par leur autre extrémité, sont reliées l'une à l'autre par l'intermédiaire de deux redresseurs (13, 14) montés en série, dont la jonction est reliée par l'intermédiaire du redresseur en pont (6) à l'autre conducteur (18) de la ligne d'amenée du courant de secteur.

3. Agencement de circuit selon la revendication 1 ou la revendication 2, caractérisé en ce que les bobines d'excitation (2, 3) sont divisées et en ce que leurs bobines élémentaires respectives (2a, 2b et 3a, 3b) sont décalées de 180 degrés.

4. Agencement de circuit selon la revendication 3, caractérisé en ce que chacune des bobines élémentaires (2a, 2b ou 3a, 3b) excitées par la même demi-onde du courant de secteur est, par l'intermédiaire d'un redresseur qui lui est associé (13a, 13b ou 14a, 14b), reliée à un autre conducteur (12, 18) de la ligne d'amenée du courant de secteur.

*Fig.1*

1

*Fig. 2*